# EUROPÄISCHE PATENTANMELDUNG

(11) **EP 4 512 662 A1**
(43) Veröffentlichungstag der Anmeldung: **26.02.2025**
(21) Anmeldenummer: 24195291.0
(22) Anmeldetag: 20.08.2024
(51) Int. Cl.: B60P 3/34, B60P 3/38, E04H 15/06

(54) **FREIZEITFAHRZEUG, ÜBERZELT UND ANORDNUNG**

(30) Priorität: 25.08.2023 DE 102023122940
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Überzelt (3) für Freizeitfahrzeuge (2), insbesondere Wohnmobile und/oder Campervans und/oder auf Hochdachkombis basierenden Freizeitfahrzeugen, mit einem Zeltdach (15), das sich im aufgebauten Zustand zumindest im Wesentlichen über ein Dach (12) des unter dem Zeltdach (15) angeordneten Freizeitfahrzeugs (2) erstreckt. Vorgeschlagen wird, dass das Zeltdach (15) so ausgebildet ist, dass es sich im aufgebauten Zustand über ein auf dem Dach (12) des Freizeitfahrzeugs (2) aufgebautes Dachzelt (4), insbesondere Aufstelldach (4), erstreckt, und dass das Zeltdach (15) so ausgebildet ist, dass es sich im aufgebauten Zustand über zumindest einen neben dem Freizeitfahrzeug (2) vorgesehenen Aufenthaltsbereich (16) erstreckt. Ferner sind eine Anordnung (1) mit einem Freizeitfahrzeug (2) und einem Überzelt (3) sowie eine Anordnung (1') mit einem Dachzelt (4) eines Freizeitfahrzeugs (2) und einem Überzelt (3) angegeben. Außerdem ist ein Freizeitfahrzeug (2) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der DE 10 2021 106 143 A1 ist ein Dachzelt für Fahrzeuge bekannt. Das bekannt Dachzelt umfasst einen ersten (oberen) Abdeckungsabschnitt, bestehend aus einer wasserfesten Oberschale und einen zweiten (unteren) Abdeckungsabschnitt, der ein dem oberen Abdeckungsabschnitt identisch großes Bodenelement beinhaltet und mindestens einen äußeren Scharnierverbindungsabschnitt, der den ersten Abdeckungsabschnitt und den zweiten Abdeckungsabschnitt bis auf 180° drehbar verbindet und einen Zeitabschnitt, der mit dem ersten Abdeckungsabschnitt und dem zweiten Abdeckungsabschnitt gekoppelt ist, wobei der untere Abdeckungsabschnitt so vorgesehen ist, dass er fest auf einem Dach einer Trägerkonstruktion montiert ist. Ferner kann im Faltmodus der erste Abdeckungsabschnitt mit dem zweiten Abdeckungsabschnitt ohne zusätzliche wasserdichte Abschnitte kofferartig formschlüssig geschlossen werden. Bei dem bekannten Dachzelt ist eine harte Schale vorgesehen, und es wird eine Verdoppelung der Liegefläche erreicht. Bei dem bekannten Dachzelt sind Stützen zur Stabilisierung des oberen Abdeckelements im Auffaltmodus vorgesehen. Auf der Oberseite des oberen Abdeckungsabschnitts ist eine Befestigungsmöglichkeit für eine Öffnungshilfe obligatorisch. Eine zum Zelt gehörige Leiter kann diese Öffnungshilfe realisieren.

Aus der EP 3 464 755 A1 ist ein Fahrzeug mit einem Dachzelt umfassend ein Traggerüst, eine am Traggerüst abgestützte Zelthaut sowie einen Zeltboden bekannt. Bei dem bekannten Zelt ist der Zeltboden von einem aufblasbaren, im aufgeblasenen Zustand plattenartigen Körper gebildet ist, dessen Deck- und Bodenlage aus einem flexiblen Material bestehen und durch eine Vielzahl von Verbindungsfäden oder Verbindungsfasern miteinander verbunden und im aufgeblasenen Zustand in einem maximalen Normalabstand zueinander gehalten sind.

Aus der DE 1 796 442 U ist eine Zeltgarage bekannt, die einen wettergeschützten, nicht ortsgebundenen Abstellraum für Personenkraftwagen bildet. Die Zeltgarage kann auch als Wohn-Schlafzelt genutzt werden.

Aufgabe der Erfindung ist es, eine Überzelt für ein Freizeitfahrzeug, eine Anordnung mit einem Dachzelt und einem Überzelt, eine Anordnung mit einem Freizeitfahrzeug und einem Überzelt und ein Freizeitfahrzeug anzugeben, die verbessert ausgestaltet sind. Insbesondere ist es eine Aufgabe der Erfindung ein Überzelt für ein Freizeitfahrzeug eine Anordnung mit einem Dachzelt und einem Überzelt, eine Anordnung mit einem Freizeitfahrzeug und einem Überzelt und ein Freizeitfahrzeug anzugeben, bei denen ein verbesserter Komfort bei einem Aufenthalt erreicht ist.

Die Aufgabe wird durch eine Überzelt mit den Merkmalen des unabhängigen Patentanspruchs 1, eine Anordnung mit einem Dachzelt und einem Überzelt nach Patentanspruch 13, eine Anordnung mit einem Freizeitfahrzeug und einem Überzelt nach Patentanspruch 14 und ein Freizeitfahrzeug mit den Merkmalen des Patentanspruchs 15 gelöst. Vorteilhafte Weiterbildung der Erfindung sind in den Unteransprüchen angegeben.

Die Aufgabe wird durch ein Überzelt für Freizeitfahrzeuge, insbesondere Wohnmobile und/oder Campervans und/oder auf Hochdachkombis basierenden Freizeitfahrzeugen, mit einem Zeltdach, das sich im aufgebauten Zustand zumindest im Wesentlichen über ein Dach des unter dem Zeltdach angeordneten Freizeitfahrzeugs erstreckt, gelöst, wobei das Zeltdach so ausgebildet ist, dass es sich im aufgebauten Zustand über ein auf dem Dach des Freizeitfahrzeugs aufgebautes Dachzelt, insbesondere Aufstelldach, erstreckt, und wobei das Zeltdach so ausgebildet ist, dass es sich im aufgebauten Zustand über zumindest einen neben dem Freizeitfahrzeug vorgesehenen Aufenthaltsbereich erstreckt.

Das Freizeitfahrzeug und das Dachzelt des Freizeitfahrzeugs sind keine Bestandteile des erfindungsgemäßen Überzelts. Insbesondere kann das Überzelt auch unabhängig von einem Freizeitfahrzeug oder einem Dachzelt eines Freizeitfahrzeugs hergestellt und vertrieben werden.

Ferner wird die Aufgabe durch eine Anordnung mit einem Dachzelt, insbesondere einem Aufstelldach, eines Freizeitfahrzeugs, insbesondere eines Wohnmobils und/oder eines Campervans und/oder eines auf einem Hochdachkombi basierenden Freizeitfahrzeugs, gelöst, wobei das Dachzelt auf dem Dach des Freizeitfahrzeugs aufbaubar ist, wobei ein solches Überzelt vorgesehen ist und wobei im aufgebauten Zustand das Dachzelt des Freizeitfahrzeugs zumindest im Wesentlichen unter dem Zeltdach des Überzeltes anordenbar ist.

Das Freizeitfahrzeug ist kein Bestandteil dieser erfindungsgemäßen Anordnung mit einem Dachzelt und einem Überzelt. Insbesondere kann diese Anordnung auch unabhängig von einem Freizeitfahrzeug hergestellt und vertrieben werden. Hierbei ist das Dach des Freizeitfahrzeugs nicht notwendigerweise ein Bestandteil des Dachzelts, insbesondere des Aufstelldachs.

Außerdem wird die Aufgabe durch eine Anordnung mit einem Freizeitfahrzeug, insbesondere einem Wohnmobil und/oder einem Campervan und/oder einem auf einem Hochdachkombi basierenden Freizeitfahrzeug, wobei das Freizeitfahrzeug ein Dachzelt, insbesondere ein Aufstelldach, aufweist, gelöst, wobei ein solches Überzelt vorgesehen ist und wobei im aufgebauten Zustand das Dachzelt des Freizeitfahrzeugs zumindest im Wesentlichen unter dem Zeltdach des Überzeltes anordenbar ist.

Ferner wird die Aufgabe durch ein Freizeitfahrzeug, insbesondere Wohnmobil und/oder Campervan und/oder auf einem Hochdachkombi basierenden Freizeitfahrzeug, gelöst, wobei das Freizeitfahrzeug ein Dachzelt, insbesondere ein Aufstelldach, aufweist und wobei ein solches Überzelt als Zubehör vorgesehen ist.

Vorteilhaft ist es, dass das Zeltdach so ausgebildet ist, dass es sich im aufgebauten Zustand in einer Längsrichtung des Freizeitfahrzeugs betrachtet über zumindest einen hinter einem Heckbereich des Freizeitfahrzeugs vorgesehenen Aufenthaltsbereich erstreckt. Dadurch kann in komfortabler Weise ein Zugriff auf Dinge im Heck des Freizeitfahrzeugs erfolgen. Gegebenenfalls kann das Freizeitfahrzeug auch so ausgebildet sein, dass ein Ausstieg aus dem Heck möglich ist. Dann kann in komfortabler Weise ein überdachtes Ein- und Aussteigen erfolgen.

Vorteilhaft ist es, dass der hinter dem Heckbereich des Freizeitfahrzeugs vorgesehene Aufenthaltsbereichs einen Bereich hinter einer geöffneten Heckklappe des Freizeitfahrzeugs umfasst. Dadurch wird der überdachte, nutzbare Bereich vorteilhaft vergrößert.

Vorteilhaft ist es, dass das Zeltdach so ausgebildet ist, dass es sich im aufgebauten Zustand in einer Längsrichtung des Freizeitfahrzeugs betrachtet über zumindest einen seitlich neben einer Längsseite des Freizeitfahrzeugs vorgesehenen Zugangsbereich erstreckt. Dadurch kann beispielsweise ein seitlicher Ausstieg aus dem Freizeitfahrzeug im überdachten Zugangsbereich erfolgen.

Vorteilhaft ist es, dass der Zugangsbereich einen Standbereich für eine Leiter, die einen Zugang in das aufgebaute Dachzelt des Freizeitfahrzeugs ermöglicht, umfasst. Dadurch wird eine komfortabler, überdachter Zugang zum Dachzelt ermöglicht.

Vorteilhaft ist es, dass ein Aufenthaltsbereich einen Ess-Sitz-Bereich umfasst, in dem mehrere Campingstühle und ein Campingtisch anordenbar sind. Dadurch kann eine überdachte Terrasse realisiert werden.

Vorteilhaft ist es, dass an einer mehreckige, insbesondere fünfeckige, Grundfläche des Aufenthaltsbereichs für den Ess-Sitz-Bereich zumindest eine Seitenwand vorgesehen ist. Hierdurch kann der Komfort beim Aufenthalt weiter verbessert werden. Es kann ein Windschutz beim Sitzen und Essen ermöglicht werden. Es kann auch ein Windschutz beim Kochen ermöglicht werden, insbesondere wenn im Heckbereich des Freizeitfahrzeugs ein vorzugsweise aus dem Heckbereich ausziehbares Küchenmodul vorgesehen ist.

Vorteilhaft ist es, dass die Seitenwand zumindest ein Fenster aufweist. Hierdurch kann die Aussicht verbessert werden.

Vorteilhaft ist es, dass eine Bodenlage vorgesehen ist, die mehreckige Grundfläche zumindest im Wesentlichen überdeckt. Dadurch kann eine komfortable Standfläche realisiert werden. Die Stabilität des Überzelts kann verbessert werden.

Vorteilhaft ist es, dass an zumindest einer Ecke, vorzugsweise an jeder Ecke, der mehreckigen Grundfläche eine aufblasbare und vorzugsweise selbstversteifende Stützsäule vorgesehen ist. Hierdurch kann eine vorteilhafte Stützkonstruktion für das Zeltdach realisiert werden, die insbesondere leicht und zugleich stabil sein kann.

Vorteilhaft ist es, dass an zumindest zwei benachbarten Ecken der mehreckigen Grundfläche jeweils eine Stützsäule vorgesehen ist und dass zwischen zumindest zwei benachbarten Stützsäulen zumindest ein offener Bereich gebildet ist. Dadurch wird eine Naturnähe bei gleichzeitig stabilem Aufbau ermöglicht. Es kann ein großer Aufenthaltsbereich ermöglicht werden.

Vorteilhaft ist es, dass zumindest eine Stützsäule in Längsrichtung des Freizeitfahrzeugs betrachtet neben einer Längsseite des Freizeitfahrzeugs und vorzugsweise neben dem Heckbereich des Freizeitfahrzeugs angeordnet ist. Dadurch kann ein Zugriff und/oder ein Ausladen von Gegenständen aus dem Fahrzeugheck zuverlässig erfolgen. Ein Herunterdrücken einer Heckklappe kann gegebenenfalls vermieden werden. Ausreichende Abstände des Materials, insbesondere eines textilen Materials, des Überzelts von beispielsweise einem ausgezogenen Küchenmodul kann gewährleistet werden.

Weitere Vorteile und Einzelheiten der Erfindung werden anhand des in den schematischen Figuren dargestellten Ausführungsbeispiels näher erläutert. Hierbei zeigen:
- Fig. 1: eine Anordnung mit einem Freizeitfahrzeug, das ein Aufstelldach umfasst, und einem Überzelt entsprechend einem Ausführungsbeispiel in einer schematischen, räumlichen Darstellung, wobei eine Ansicht von seitlich hinten auf das Freizeitfahrzeug und in das Überzelt gezeigt ist;
- Fig. 2: das in Fig. 1 gezeigte Freizeitfahrzeug;
- Fig. 3: das in Fig. 2 gezeigte Freizeitfahrzeug entsprechend einer abgewandelten Ausgestaltung und
- Fig. 4: eine Ansicht unter dem Überzelt auf einen teilweise dargestellten Aufenthaltsbereich, auf einen Zugangsbereich und auf das Freizeitfahrzeug von schräg hinten in einer schematischen Darstellung entsprechend dem Ausführungsbeispiel.

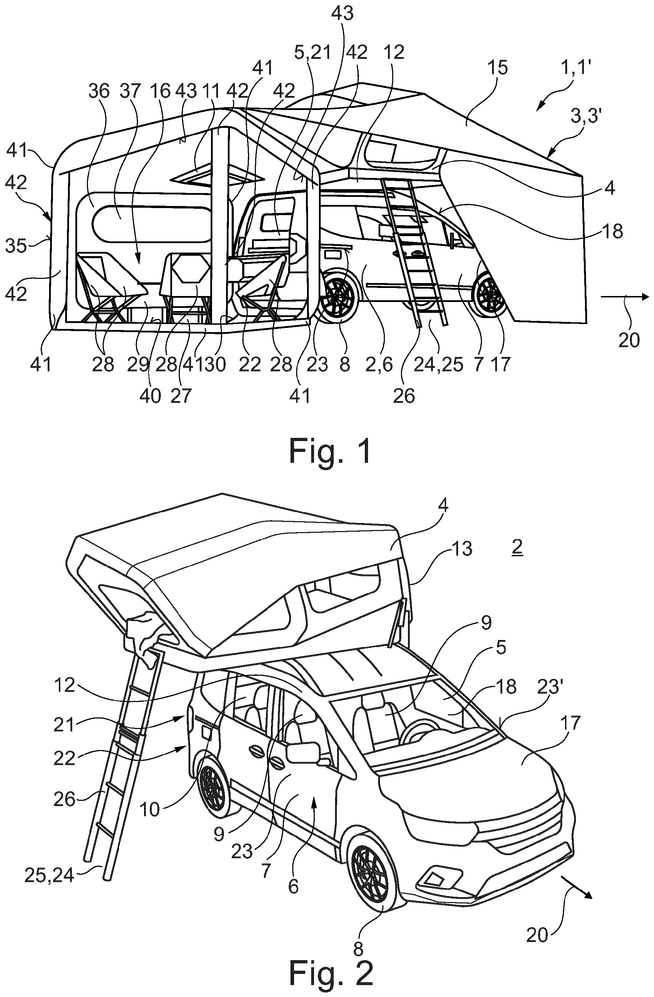

Fig. 1 zeigt eine Anordnung 1 mit einem Freizeitfahrzeug 2 und einem Überzelt 3 entsprechend einem Ausführungsbeispiel in einer schematischen, räumlichen Darstellung, wobei eine Ansicht von seitlich hinten auf das Freizeitfahrzeug 2 und in das Überzelt 1 gezeigt ist. Ferner zeigt Fig. 2 das in Fig. 1 gezeigte Freizeitfahrzeug 2.

Das Freizeitfahrzeug 2 umfasst ein Dachzelt 4. Der Begriff des Dachzelts 4 ist hierbei breit zu verstehen und umfasst sowohl Dachzelte 4 mit einem Zugang von Außen als auch Dachzelte 4 mit einem Zugang aus einem Fahrzeuginnere 5. In diesem Ausführungsbeispiel ist das Dachzelt 4 als Aufstelldach 4 ausgebildet.

Das Freizeitfahrzeug 1 kann auf einem Basisfahrzeug 6 basieren. Als Basisfahrzeug 6 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 7, ein Fahrwerk 8, die Sitze 9 der ersten Reihe und die Rückbank 10 oder Einzelsitze im Fond übernommen. Die Heckklappe 11 ist vorzugsweise die Heckklappe 11 des Basisfahrzeugs 4.

Allerdings können geeignete Modifikationen vorgesehen sein, die beispielsweise ein Dach 12 des Freizeitfahrzeugs 1 betreffen können. Beispielsweise kann in dem Dach 12 ein Dachausschnitt (nicht dargestellt) vorgesehen sein. Das Dach 12 ist dann bei geschlossenem Aufstelldach 4 durch eine Dachschale 13 des Aufstelldaches 4 geschlossen. Bei dem in Fig. 2 gezeigten Freizeitfahrzeug 2 ist aber kein Dachausschnitt erforderlich.

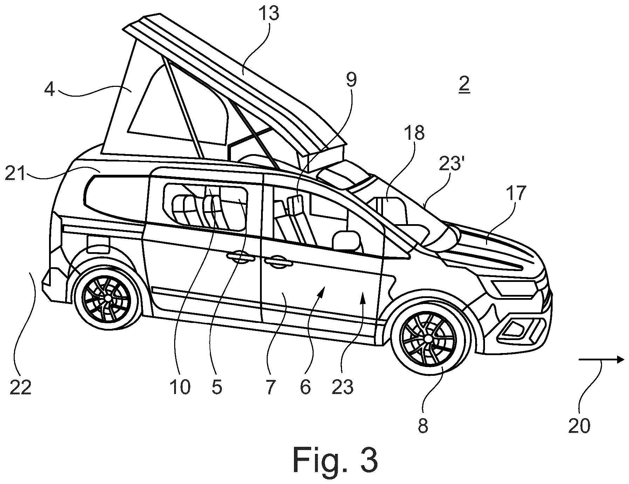

Fig. 3 zeigt eine abgewandelte Ausgestaltung des in Fig. 2 gezeigten Freizeitfahrzeug 2. Bei dieser abgewandelten Ausgestaltung kann bei dem Freizeitfahrzeug 2 ein Aufstelldach 4 vorgesehen sein, bei dem ein Zugang zum Dachzelt 4 aus dem Fahrzeuginneren 5 erfolgt. Das Überzelt 3 kann auch bei dem in Fig. 3 gezeigten Freizeitfahrzeug 2 zum Einsatz kommen.

Im folgenden ist die Ausgestaltung des Überzelts 3 weiter an Hand des in Fig. 1 und 2 gezeigten Ausführungsbeispiels beschrieben.

Das Überzelt 3 umfasst ein Zeltdach 15. Im aufgebauten Zustand erstreckt sich das Zeltdach 15 zumindest im Wesentlichen über ein Dach 12 des unter dem Zeltdach 15 angeordneten Freizeitfahrzeugs 2. Ferner erstreckt sich das Zeltdach 15 über einen Aufenthaltsbereich 16. In diesem Ausführungsbeispiel erstreckt sich das Zeltdach 15 allerdings nicht über eine Motorhaube 17 des Freizeitfahrzeugs 2. Das Freizeitfahrzeug 2 ist somit nur teilweise unter dem Zeltdach 15 angeordnet. Ferner kann sich auch eine Windschutzscheibe 18 ganz oder teilweise außerhalb des von dem Zeltdach 15 überspannten Bereichs liegen.

Im aufgebauten Zustand ist auch das Dachzelt 4 des Freizeitfahrzeugs 2 aufgebaut. Das Zeltdach 15 erstreckt sich hierbei auch über das auf dem Dach 12 des Freizeitfahrzeugs 2 aufgebaute Dachzelt 4.

Der Aufenthaltsbereich 16, über den sich das Zeltdach 15 erstreckt, ist direkt neben dem Freizeitfahrzeug 2 vorgesehen, so dass sich eine unterbrechungsfreie Überspannung und somit ein unterbrechungsfreier Schutz vor Regen und Sonne ergibt. In diesem Ausführungsbeispiel erstreckt sich das Zeltdach 15 in einer Längsrichtung 20 des Freizeitfahrzeugs 2 betrachtet über den hinter einem Heckbereich 21 des Freizeitfahrzeugs 2 vorgesehenen Aufenthaltsbereich 16. Der hinter dem Heckbereich 21 des Freizeitfahrzeugs 2 vorgesehene Aufenthaltsbereichs 16 erstreckt sich hierbei auch über einen Bereich 22 hinter einer geöffneten Heckklappe 11 des Freizeitfahrzeugs 2.

Bei einer abgewandelten Ausgestaltung kann sich ein ein solcher Aufenthaltsbereich zusätzlich oder alternativ aber auch in Längsrichtung 20 betrachtet direkt neben dem Freizeitfahrzeug 2 befinden.

Das Zeltdach 15 erstreckt sich in der Längsrichtung 20 des Freizeitfahrzeugs 2 betrachtet zusätzlich über einen seitlich neben einer Längsseite 23 des Freizeitfahrzeugs 2 vorgesehenen Zugangsbereich 24 zum Freizeitfahrzeug 2 und/oder zum Dachzelt 4. In diesem Ausführungsbeispiel dient der Zugangsbereich 24 sowohl für das Freizeitfahrzeug 2 als auch für das Dachzelt 4. Der Zugangsbereich 24 umfasst hierfür einen Standbereich 25 für eine Leiter 26, die einen Zugang in das aufgebaute Dachzelt 4 des Freizeitfahrzeugs 2 ermöglicht.

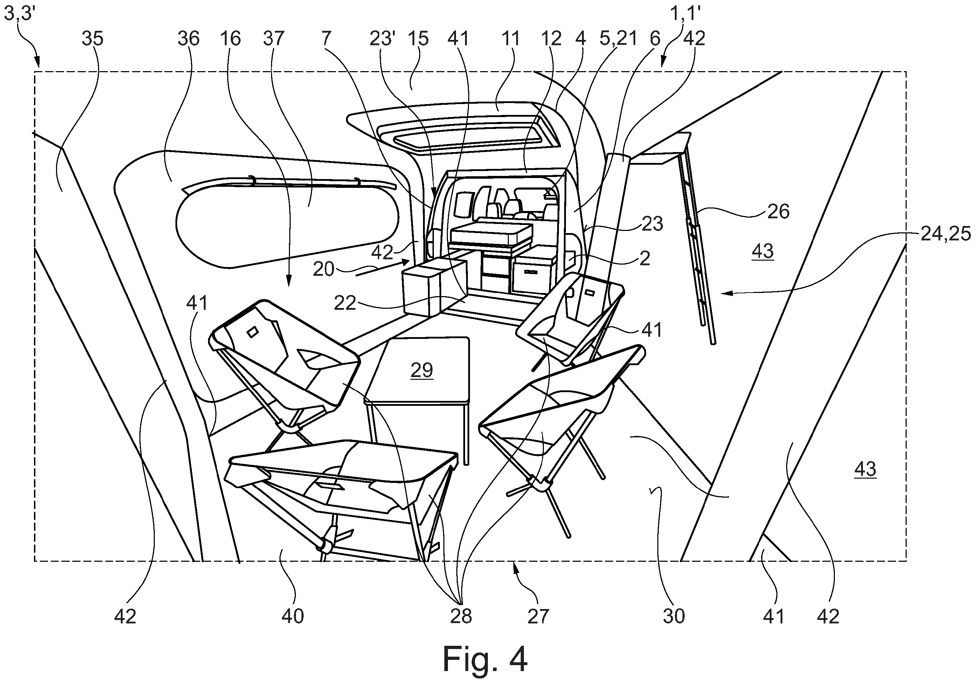

Fig. 4 zeigt eine Ansicht unter dem Überzelt 3 auf einen teilweise dargestellten Aufenthaltsbereich 16, auf den Zugangsbereich 24 und auf das Freizeitfahrzeug 2 von schräg hinten in einer schematischen Darstellung entsprechend dem Ausführungsbeispiel. Der Aufenthaltsbereich 16 schließt einen einen Ess-Sitz-Bereich 27 ein. In dem Ess-Sitz-Bereich 27 sind mehrere Campingstühle 28 und ein Campingtisch 29 angeordnet. Dadurch können sich Nutzer des Ess-Sitz-Bereichs 27 direkt aus dem Heckbereich 21 des Freizeitfahrzeugs bedienen.

Außerdem ist eine fünfeckige Grundfläche 30 des Aufenthaltsbereichs 16 für den Ess-Sitz-Bereich 27 vorgesehen. Dadurch wird der Komfort weiter verbessert. Das Freizeitfahrzeug 2 kann eine Modulküche 31 aufweisen, die aus dem Heckbereich 21 des Freizeitfahrzeugs 2 über die Grundfläche 30 gezogen werden kann. In der Modulküche zubereitete Speisen und Getränke können dann besonders komfortabel konsumiert werden. Ferner ist eine bequeme Nutzung der Modulküche 31 mögliche, die nahe an dem Ess-Sitz-Bereich 27 positioniert ist.

An den Seiten der fünfeckigen Grundfläche 30 sind Seitenwände 35, 36 vorgesehen. Dadurch wird ein Windschutz für den Ess-Sitz-Bereich 27 gewährleistet. Dies kann auch vermeiden, dass beispielsweise Sand durch den Ess-Sitz-Bereich geblasen wird. Ferner kann ein gewisser Wetterschutz gewährleistet werden. Ein Regen- und Sonnenschutz wird außerdem durch das Zeltdach 15 gewährleistet.

Die Seitenwände 35, 36 können Fenster 37 aufweisen, wobei in Fig. 1 und 4 exemplarisch ein Fenster 37 der Seitenwand 36 dargestellt ist. Ferner kann eine Bodenlage 40 vorgesehen sein, die fünfeckige Grundfläche 30 zumindest im Wesentlichen überdeckt. Dadurch kann insbesondere bei sandigem, feuchtem oder erdigem Untergrund ein Komfortgewinn erreicht werden.

An den Ecken 41 der mehreckigen Grundfläche 30 sind aufblasbare und selbstversteifende Stützsäulen 42 vorgesehen. Diese Stützsäulen 42 gewährleisten eine vorteilhafte Abstützung des Zeltdaches 15. Ferner sind sie kompakt ausgeführt, so dass ein großes Blickfeld zwischen den Stützsäulen 42 verbleibt. Hierfür sind zwischen an benachbarten Ecken 41 der mehreckigen Grundfläche 30 vorgesehenen Stützsäulen 42, zwischen denen keine Seitenwand 35, 36 vorgesehen ist, jeweils offene Bereiche 43 zwischen den jeweiligen Stützsäulen 42 gebildet. In Kombination mit den Fenstern 37 in den Seitenwänden 35, 36 wird zumindest weitgehend ein Rundumblick ermöglicht.

Ferner sind Stützsäulen 42 in Längsrichtung 20 des Freizeitfahrzeugs 2 betrachtet neben Längsseiten 23, 23' des Freizeitfahrzeugs 2, insbesondere beidseitig neben dem Heckbereich 21 des Freizeitfahrzeugs 2, angeordnet.

Somit ist ein Überzelt 3 entsprechend dem Ausführungsbeispiel beschrieben. Ferner sind eine Anordnung 1 mit einem Freizeitfahrzeug 2 und einem Überzelt 3 sowie eine Anordnung 1' mit einem Dachzelt 4 eines Freizeitfahrzeugs 2 und einem Überzelt 3 beschrieben. Des Weiteren ist ein Freizeitfahrzeug 2 mit einem Überzelt 3 beschrieben.

Somit ist eine Anordnung 1' mit einem Dachzelt 4, insbesondere einem Aufstelldach 4, eines Freizeitfahrzeugs 2, insbesondere eines Wohnmobils und/oder eines Campervans und/oder eines auf einem Hochdachkombi basierenden Freizeitfahrzeugs, wobei das Dachzelt 4 auf dem Dach 12 des Freizeitfahrzeugs 2 aufbaubar ist, beschrieben, wobei ein Überzelt 3 vorgesehen ist und wobei im aufgebauten Zustand das Dachzelt 12 des Freizeitfahrzeugs 2 zumindest im Wesentlichen unter dem Zeltdach 15 des Überzeltes 3 anordenbar ist.

Ferner ist eine Anordnung 1 mit einem Freizeitfahrzeug 2, insbesondere einem Wohnmobil und/oder einem Campervan und/oder einem auf einem Hochdachkombi basierenden Freizeitfahrzeug, wobei das Freizeitfahrzeug 2 ein Dachzelt 4, insbesondere ein Aufstelldach 4, aufweist, beschrieben, wobei das Überzelt 3 vorgesehen ist und wobei im aufgebauten Zustand das Dachzelt 4 des Freizeitfahrzeugs 2 zumindest im Wesentlichen unter dem Zeltdach 15 des Überzeltes 3 anordenbar ist.

Das Freizeitfahrzeug 2, das das Dachzelt 4 aufweist, kann das Überzelt 3 als Zubehör 3' an Bord haben. Das Freizeitfahrzeug 2 kann hierbei mit dem Überzelt 3 vertrieben werden. Das Überzelt 3 kann aber auch unabhängig von dem Freizeitfahrzeug 2 als Zubehör hergestellt und vertrieben werden. Ferner kann das Überzelt 3 zusammen mit einem unabhängig von dem Freizeitfahrzeug 2 vertriebenen Dachzelt 4, insbesondere Aufstelldach 4, hergestellt und vertrieben werden.

Die Erfindung ist nicht auf die beschriebenen Ausführungsformen beschränkt.

## Patentansprüche

1. Überzelt (3) für Freizeitfahrzeuge (2), insbesondere Wohnmobile und/oder Campervans und/oder auf Hochdachkombis basierenden Freizeitfahrzeugen, mit einem Zeltdach (15), das sich im aufgebauten Zustand zumindest im Wesentlichen über ein Dach (12) des unter dem Zeltdach (15) angeordneten Freizeitfahrzeugs (2) erstreckt,
**dadurch gekennzeichnet,**
**dass** das Zeltdach (15) so ausgebildet ist, dass es sich im aufgebauten Zustand über ein auf dem Dach (12) des Freizeitfahrzeugs (2) aufgebautes Dachzelt (4), insbesondere Aufstelldach (4), erstreckt, und dass das Zeltdach (15) so ausgebildet ist, dass es sich im aufgebauten Zustand über zumindest einen neben dem Freizeitfahrzeug (2) vorgesehenen Aufenthaltsbereich (16) erstreckt.

2. Überzelt nach Anspruch 1,
**dadurch gekennzeichnet,**
**dass** das Zeltdach (15) so ausgebildet ist, dass es sich im aufgebauten Zustand in einer Längsrichtung (20) des Freizeitfahrzeugs (2) betrachtet über zumindest einen hinter einem Heckbereich (21) des Freizeitfahrzeugs (2) vorgesehenen Aufenthaltsbereich (16) erstreckt.

3. Überzelt nach Anspruch 2,
**dadurch gekennzeichnet,**
**dass** der hinter dem Heckbereich (21) des Freizeitfahrzeugs (2) vorgesehene Aufenthaltsbereichs (16) einen Bereich (22) hinter einer geöffneten Heckklappe (11) des Freizeitfahrzeugs (2) umfasst.

4. Überzelt nach einem der vorhergehenden Ansprüche,
**dadurch gekennzeichnet,**
**dass** das Zeltdach (15) so ausgebildet ist, dass es sich im aufgebauten Zustand in einer Längsrichtung (20) des Freizeitfahrzeugs (2) betrachtet über zumindest einen seitlich neben einer Längsseite (23) des Freizeitfahrzeugs (2) vorgesehenen Zugangsbereich (24) erstreckt.

5. Überzelt nach Anspruch 4,
**dadurch gekennzeichnet,**
**dass** der Zugangsbereich (24) einen Standbereich (25) für eine Leiter (26), die einen Zugang in das aufgebaute Dachzelt (4) des Freizeitfahrzeugs (2) ermöglicht, umfasst.

6. Überzelt nach einem der vorhergehenden Ansprüche ,
**dadurch gekennzeichnet,**
**dass** ein Aufenthaltsbereich (16) einen Ess-Sitz-Bereich (27) umfasst, in dem mehrere Campingstühle (28) und ein Campingtisch (29) anordenbar sind.

7. Überzelt nach Anspruch 6,
**dadurch gekennzeichnet,**
**dass** an einer mehreckige, insbesondere fünfeckige, Grundfläche (30) des Aufenthaltsbereichs (16) für den Ess-Sitz-Bereich (27) zumindest eine Seitenwand (35, 36) vorgesehen ist.

8. Überzelt nach Anspruch 7,
**dadurch gekennzeichnet,**
**dass** die Seitenwand (35, 36) zumindest ein Fenster (37) aufweist.

9. Überzelt nach Anspruch 7 oder 8,
**dadurch gekennzeichnet,**
**dass** eine Bodenlage (40) vorgesehen ist, die mehreckige Grundfläche (30) zumindest im Wesentlichen überdeckt.

10. Überzelt nach einem der Ansprüche 7 bis 9,
**dadurch gekennzeichnet,**
**dass** an zumindest einer Ecke (41), vorzugsweise an jeder Ecke (41), der mehreckigen Grundfläche (30) eine aufblasbare und vorzugsweise selbstversteifende Stützsäule (42) vorgesehen ist.

11. Überzelt nach einem der Ansprüche 7 bis 10,
**dadurch gekennzeichnet,**
**dass** an zumindest zwei benachbarten Ecken (41) der mehreckigen Grundfläche (30) jeweils eine Stützsäule (42) vorgesehen ist und dass zwischen zumindest zwei benachbarten Stützsäulen (42) zumindest ein offener Bereich (43) gebildet ist.

12. Überzelt nach Anspruch 10 oder 11,
**dadurch gekennzeichnet,**
**dass** zumindest eine Stützsäule (42) in Längsrichtung (20) des Freizeitfahrzeugs (2) betrachtet neben einer Längsseite (23) des Freizeitfahrzeugs (2) und vorzugsweise neben dem Heckbereich (21) des Freizeitfahrzeugs (2) angeordnet ist.

13. Anordnung (1 ') mit einem Dachzelt (4), insbesondere einem Aufstelldach (4), eines Freizeitfahrzeugs (2), insbesondere eines Wohnmobils und/oder eines Campervans und/oder eines auf einem Hochdachkombi basierenden Freizeitfahrzeugs, wobei das Dachzelt (4) auf dem Dach (12) des Freizeitfahrzeugs (2) aufbaubar ist, wobei ein Überzelt (3) nach einem der Ansprüche 1 bis 12 vorgesehen ist und wobei im aufgebauten Zustand das Dachzelt (12) des Freizeitfahrzeugs (2) zumindest im Wesentlichen unter dem Zeltdach (15) des Überzeltes (3) anordenbar ist.

14. Anordnung (1) mit einem Freizeitfahrzeug (2), insbesondere einem Wohnmobil und/oder einem Campervan und/oder einem auf einem Hochdachkombi basierenden Freizeitfahrzeug, wobei das Freizeitfahrzeug (2) ein Dachzelt (4), insbesondere ein Aufstelldach (4), aufweist, wobei ein Überzelt (3) nach einem der Ansprüche 1 bis 12 vorgesehen ist und wobei im aufgebauten Zustand das Dachzelt (4) des Freizeitfahrzeugs (2) zumindest im Wesentlichen unter dem Zeltdach (15) des Überzeltes (3) anordenbar ist.

15. Freizeitfahrzeug (2), insbesondere Wohnmobil und/oder Campervan und/oder auf einem Hochdachkombi basierenden Freizeitfahrzeug, wobei das Freizeitfahrzeug (2) ein Dachzelt (4), insbesondere ein Aufstelldach (4), aufweist und wobei ein Überzelt (3) nach einem der Ansprüche 1 bis 12 als Zubehör (3') vorgesehen ist.
